# EUROPEAN PATENT APPLICATION

(11) **EP 4 832 189 A1**
(43) Date of publication of application: **28.10.2026**
(21) Application number: 25172125.4
(22) Date of filing: 24.04.2025
(51) Int. Cl.: H01M 50/204, H01M 50/249, H01M 50/367

(54) **A BATTERY SYSTEM AND AN ELECTRIC VEHICLE INCLUDING THE BATTERY SYSTEM**

(71) Applicant: SAMSUNG SDI CO., LTD., Yongin-si, Gyeonggi-do 17084 (KR)
(72) Inventor: Reinprecht, Wolfgang, 8144 Attendorf (AT); Reinprecht, Stefan, 8144 Attendorf (AT)
(74) Representative: Gulde & Partner

(57) **Abstract**

The present disclosure refers to a battery system (100). The battery system (100) includes a battery pack (10) including a housing (11) with a floor (12) and a plurality of battery cells (14) accommodated within the housing (11) above the floor (12). The battery system (100) further includes an underbody protection plate (13) arranged below the floor (12), wherein the underbody protection plate (13) and the floor (12) are spaced apart to form an enclosed space (ES) therebetween, wherein the enclosed space (ES) includes at least one inlet (16) fluidly connected to the housing (11) and an outlet (17) which leads out of the battery system (100), wherein the outlet (17) is arranged in a central area of the underbody protection plate (13). Also, the battery system (100) includes a plurality of baffles (18, 18') extending between the underbody protection plate (13) and the floor (12) and arranged between the inlet (16) and the outlet (17) to redirect venting products (VP) exhausted by at least one of the battery cells (14) while a thermal runaway. The present disclosure further refers to an electric vehicle including the battery system (100).

## Description

### Field of the Disclosure

The present disclosure relates to a battery system. The present disclosure also relates to an electric vehicle including the battery system.

### Technological Background

A battery pack is a set of any number of (for example identical) battery modules or single battery cells. The battery modules, respectively battery cells, may be configured in a series, parallel or a series/parallel connection configuration to provide a desired voltage, capacity, and/or power density. Components of a battery pack include the individual battery modules, and the interconnects, which provide electrical conductivity between the battery modules.

A battery system may also include a battery management system (BMS), which is an electronic system that is configured to manage a rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SoC) or depth of discharge (DoD) to indicate the charge level of the battery cell, state of health (SoH; a variously-defined measurement of the remaining capacity of the battery cell as a percent of the original capacity), state of power (SoP); the amount of power available for a defined time interval given the current power usage, temperature and other conditions), state of safety (SoS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, by requesting the devices to which the battery is connected to reduce or even terminate using the battery, and by actively controlling the environment, such as through heaters, fans, air conditioning or liquid cooling.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, for example in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. If the battery pack is fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the related art, despite any modular structure, usually include a battery housing that serves as an enclosure to seal the battery system against the environment and provides structural protection of the battery system's components. Housed battery systems are usually mounted as a whole into their application environment, e.g. an electric vehicle.

To provide thermal control of the battery pack, a thermal management system may be employed to safely use the battery module by efficiently emitting, discharging, and/or dissipating heat generated from the rechargeable battery cells therein. If the heat emission/discharge/dissipation is not sufficiently performed, temperature deviations may occur between respective battery cells and the battery module may not generate a desired (or designed) amount of power. In addition, an increase of the internal temperature of the battery cells may lead to abnormal reactions occurring therein, and thus, charging and discharging performance of the rechargeable battery cells may deteriorate and the life-span of the rechargeable battery cells may be shortened. Thus, cell cooling to effectively emit/discharge/dissipate heat from the battery cells is desired.

Exothermic decomposition of cell components may lead to a so-called thermal runaway. Generally, thermal runaway describes a process that accelerates due to increased temperature, in turn releasing energy that further increases the temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

If a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, a failed battery cell may reach a temperature exceeding 700°C. Further, large quantities of hot gas are ejected from inside of the failed battery cell through a venting opening of the battery cell into the battery pack. The main components of the vented gas are H₂, CO₂, CO, electrolyte vapor, and other hydrocarbons. The vented gas is, therefore, flammable and potentially toxic. The vented gas also causes a gas-pressure to increase inside the battery pack. In the worst case, the high temperatures lead to the process spreading to neighboring cells and fire in the battery pack. At this stage, the fire is hard to extinguish.

As mentioned above, battery systems include multiple battery cells in series connection to achieve a sufficiently high voltage to provide a powerful source of energy for propulsion of electric vehicles. In case of a malfunction of one or more cells or voltage sources, an overheating may happen, which causes a thermal runaway of a single cell or multiple cells with generation of hot venting gas as well as particles and fine dust exiting the battery system causing outside fire. Internal measures of particle separators depend on available space within the system. In some cases that space is not given and therefore further measures need to be considered.

DE 1020121125189 A1 discloses a battery and a cell degassing channel below the battery. The battery includes battery cells with degassing openings. One of channel walls of the cell degassing channel is provided by an underrun protection, wherein a support structure with support elements supports the channel walls and against each other. A gas path of a gas which exits a degassing cell due to support elements of the support structure extends along a sinuous line.

EP 4047730 A1 discloses a battery system for an electric vehicle, includes a plurality of battery cells with a venting side and a cooling side opposite the venting side. The battery system includes a guiding channel which is formed between a cooling plate and a bottom cover. A passage on one side of the guiding channel connects a cell chamber above the battery cells with the guiding channel. Venting products exiting the battery cells during a thermal runaway are directed along a venting path from the cell chamber through the passage into the guiding channel, through the guiding channel and via a system exit to an environment of the battery system.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery system includes a battery pack including a housing with a floor and a plurality of battery cells accommodated within the housing above the floor, an underbody protection plate arranged below the floor, wherein the underbody protection plate and the floor are spaced apart to form an enclosed space therebetween, wherein the enclosed space includes at least one inlet fluidly connected to the housing and an outlet which leads out of the battery system, wherein the outlet is arranged in a central area of the underbody protection plate, and a plurality of baffles extending between the underbody protection plate and the floor and arranged between the inlet and the outlet to redirect venting products exhausted by at least one of the battery cells while a thermal runaway.

According to another aspect of the present disclosure, an electric vehicle includes the battery system as disclosed herein.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a schematic structure of a battery system in a cross-sectional view according to one embodiment.
- FIGS. 2A - 2F: illustrate a schematic structure of an underbody protection plate in a perspective view according to some embodiments.
- FIG. 3: illustrates a schematic structure of baffles in a top view according to another embodiment.
- FIG. 4: illustrates a schematic structure of edge areas of an underbody protection plate and an enclosed space in a top view according to another embodiment.

### Detailed Description of the Invention

Reference will now be made in detail to embodiments, examples of which are illustrated in the accompanying drawings. Effects and features of the exemplary embodiments, and implementation methods thereof, will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof, but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a battery pack including a housing with a floor and a plurality of battery cells accommodated within the housing above the floor. The battery system further includes an underbody protection plate arranged below the floor, wherein the underbody protection plate and the floor are spaced apart to form an enclosed space therebetween, wherein the enclosed space includes at least one inlet fluidly connected to the housing and an outlet which leads out of the battery system, wherein the outlet is arranged in a central area of the underbody protection plate. Also, the battery system includes a plurality of baffles extending between the underbody protection plate and the floor and arranged between the inlet and the outlet to redirect venting products exhausted by at least one of the battery cells while a thermal runaway.

In other words, the battery system includes an accommodation chamber, wherein the battery cells are disposed in the accommodation chamber and enclosed by the accommodation chamber. The underbody protection plate is disposed underneath the floor. The relative arrangement may refer to an arrangement of the battery system in a vehicle that is used as intended, i.e. is in an operational position. Accordingly, "below" may refer to a positive z-direction that runs upwards in a vertical direction. In other words, the underbody protection plate is arranged below the floor such that an enclosed space is built between the floor and the underbody protection plate.

The housing may further include a cover (or, in other words, a top), wherein the plurality of battery cells is accommodated within the housing above the floor and below the cover. Each of the battery cells may include a venting side with a venting exit for allowing the venting products to exit the battery cells to a venting space or to an exhaust gas path within the housing to flow into the housing in case of the thermal runaway, the venting sides facing the cover.

The plurality of battery cells may be arranged along a stacking direction, with the stacking direction running along a long side or a short side of the enclosed space.

A cooling plate may also be arranged between the floor and the underbody protection plate.

The enclosed space or, in other words, the cavity, clearance or free space, may be an isolated space that may be only accessible through the inlet and outlet, whereas the enclosed space is formed by the underbody protection plate and the floor, or optionally by the underbody protection plate and the cooling plate.

The underbody protection plate may have an edge or a plurality of connected edges that run along its circumference and extend in the direction of or towards the floor (or the optional cooling plate), and may be connected to the floor (or the optional cooling plate) accordingly.

The edge may include a flange that contacts the floor or the optional cooling plate for joining.

A plurality of inlets may be provided.

The at least one inlet is fluidly connected to the housing. The connection between the inlet and the housing may include a dedicated venting channel, configured to direct venting products away from the housing. The inlet may be or may include an opening integrated into the underbody protection plate. The inlet may be or may include an opening integrated into the housing. The opening of the underbody protection plate may correspond to the opening of the housing to form the connection. The inlet or the opening may include a continuous opening or a pressure vent that activates when internal pressure exceeds a predetermined threshold, ensuring controlled release of venting products.

The housing may include or may form an exhaust gas path (or in other words an exhaust gas path channel) connected to the battery cells, e. g. to the venting exits of the battery cells. The exhaust gas path, or in other words exhaust gas guide, may form one contiguous or connected (fluidically connected) space suitable for containing and directing the venting products from the battery cells to the at least one inlet. The exhaust gas path may be connected to the at least one inlet.

The exhaust gas path is a safety feature that ensures gases generated during a thermal runaway are vented in a controlled and safe manner. By directing hot, flammable, or toxic gases along a predefined route, the exhaust gas path minimizes risks to nearby components and individuals and helps avoid secondary damage. The exhaust gas path may include features like venting valves or pressure relief openings that activate when internal pressure exceeds a safe threshold. Exhaust gas channels guide the escaping gases or venting products away from sensitive areas, for example to an external safety zone, while the use of heat-resistant materials ensures the system can handle the high temperatures associated with thermal runaway events. The exhaust gas path may be connected to the individual battery cells within the battery pack.

Each battery cell may include a venting valve or venting opening, a pressure relief valve or a rupture disk, that activates when internal pressure rises due to gas formation. In other words, the aforementioned elements may form the venting exit of the venting side. These mechanisms are designed to guide the escaping gases or venting products directly into the exhaust gas path. Within the battery pack, battery cells may be arranged so that gases or venting products are channeled through separate internal ducts, channels or pathways of the exhaust gas path to a central exhaust gas path. This design prevents gases or venting products from escaping uncontrollably between battery cells and reduces the risk of further damage or hazards. The venting valve or venting opening, pressure relief valve or rupture disk may be fluidly connected to the exhaust gas path.

In some embodiments, the exhaust gas path may include a centralized gas collection system fluidly connected to the battery cells, e. g. a venting space or venting chamber, which is used to gather gases or venting products from all battery cells and direct them to the at least one inlet. Further, the exhaust gas path may include separate internal ducts or pathways connected to the battery cells. This ensures that the gases are managed in a way that protects surrounding components and individuals. By connecting individual battery cells to a shared exhaust gas path, the system effectively mitigates the risks associated with thermal runaway, including pressure buildup, uncontrolled gas release, and thermal propagation. This integration is a key aspect of modern battery safety design, ensuring that even in critical situations, the risk of catastrophic failure is minimized.

A venting space may be arranged above the battery cells of the battery pack. The venting space is a room used to collect the venting products or, in other words, a venting gas, from one or more degassing battery cells for subsequent distribution. The venting gas may then be fed laterally, i.e. in a horizontal direction from the venting space and then in a vertical, downward direction via the inlet into the enclosed space. The venting space may be connected to the exhaust gas path or may be a part thereof.

The battery pack may be single or multi-level. In other words, in a multi-level battery pack, at least two rows of battery cells are provided, with one of the two rows being arranged above the other of the two rows.

The battery system may include another battery pack, whereby the other battery pack may be arranged above the one battery pack so that in other words, the venting space may be arranged between the one and the other battery pack. This venting space can then serve as a collection space for both battery packs, with the venting products then being fed to the enclosed space via the inlet in the manner described.

When the term "extending" between the underbody protection plate and the floor is used with regard to the plurality of baffles, this means in the present case that the baffles have at least a geometric extension between the underbody protection plate and the floor, according to which they may extend partially between the underbody protection plate and the floor, but may also extend completely, in which case they contact both the underbody protection plate and the floor and connect them to one another.

In the case that a cooling plate is provided as described above, the baffles may obviously extend at most as far as the cooling plate as a limiting element, in which case they contact both the underbody protection plate and the cooling plate and connect them to one another.

The plurality of baffles may further extend along a plane parallel to a plane defined by the underbody protection plate, in other words along an x- and/or y-direction. The baffles may have a long extension that runs along the x- and/or y-direction and a short extension that runs along a vertical direction as in the z-direction.

The plurality of baffles may be connected to the underbody protection plate or the floor (or the optional cooling plate).

The plurality of baffles may be connected to the underbody protection plate and the floor (or the optional the cooling plate).

The plurality of baffles may be arranged and/or may be configured in such a way that they form so-called storage areas and/or cooling areas. The storage and cooling areas may be designed by the arrangement and number of baffles.

Storage areas are areas within which the deposition of particles is permitted, whereby a flow path for the gas is maintained outside the storage areas. The flow path indicates a flow path for the venting products so that there is a continuous free flow path for them between the inlet and outlet.

Storage areas may be provided in edge areas and/or corners areas of the enclosed space, for example. Storage areas may also be provided in central areas as long as a flow path to the outlet remains. This ensures that a flow path always remains free and no blockage occurs.

Edge areas may be areas that extend along a circumference of the underbody protection plate or along a circumference of the enclosed space. They may extend less than 30%, less than 20% or less than 10% in each case starting from each side edge of the underbody protection plate or each side edge of the enclosed space towards the center of the underbody protection plate or the center of the enclosed space, respectively. The percentage ranges refer to the total lengths between opposite side edges of the corresponding component. For example, the underbody protection plate and correspondingly the enclosed space as well as the floor or the optional cooling plate may be rectangular. In this case, the edge areas are formed by a strip extending around the above-mentioned percentage areas starting from each of the four side edges of the corresponding components.

Central areas or central regions may be the remaining areas, i.e. the areas enclosed by the edge areas.

Cooling areas are areas within which a gas flow path is extended so that the residence time of the venting products increases and a higher degree of cooling effect is achieved. In this context, "extended" means that the venting products do not flow along the shortest direct path - for example, from their current location or a defined position to the outlet or another defined position - but that the plurality of baffles extend the gas flow path so that the gas flows over a greater distance, thus increasing the residence time and also increasing a flow area, which improves heat dissipation and, as a result, cooling. Cooling areas may be provided in a central region of the enclosed space. Cooling areas may also be provided in edge areas or corner areas. Several cooling areas may be fluidically connected to each other and may form a flow path between the inlet and the outlet.

Storage areas may be areas in which turbulent flow occurs. Turbulent flows occur when a flow of a medium is disturbed, often caused by obstacles combined with internal friction, in the present case by the plurality of baffles. This phenomenon, known as the turbulence effect, leads to chaotic and non-linear flow patterns. The turbulent flow is the movement of fluids in which turbulence occurs over a wide range of size scales. This type of flow is characterized by a three-dimensional flow field with a component that appears to vary randomly in time and space. The turbulence is caused by the difference in velocity of the flow at a certain distance from an overflow surface of the plurality of baffles compared to the flow near the surface of the baffles. The Reynolds number can be used to determine whether a turbulent state is present. At high Reynolds numbers, the boundary layer flow is turbulent. For this purpose, the baffles are approximated as longitudinally overflow plates, so that a turbulent flow can be said to exist from a Reynolds number of 5*10⁵. As this is a dimensionless parameter, all common flow velocity measurement methods can be used to determine it.

The plurality of baffles may be made of material that is heat-resistant to temperatures that usually occur in the case of a thermal runway, such as steel. The baffles may be made of material that is heat-resistant to temperatures above 600° C or above 800° C or above 1000° C.

The plurality of baffles may be plate-shaped so that they behave like an overflow plate. However, other shapes are also possible, for example the plurality of baffles may be convex or concave or have other shapes.

The underbody protection plate may be made of material that is heat-resistant to temperatures that usually occur in the case of a thermal runway, such as steel. The underbody protection plate may be made of material that is heat-resistant to temperatures above 600° C or above 800° C or above 1000° C. Cooling may be provided by outside air flowing over an underside of the underbody protection plate. As a result, heat transfer is further improved by the turbulence in the enclosed space.

The underbody protection plate may have various shapes, for example rectangular, square, elliptical, polygonal, etc.

The central area within which the outlet is located may be, in other words, an area of the underbody protection plate that includes the geometric center (the definition for various shapes can be found at https://en.wikipedia.org/wiki/Midpoint).

During a thermal runaway of a battery cell in a battery system, hot venting products in the form of a gas containing, among other things, particles and aluminum droplets and having temperatures of about 1000°C exit the battery cell and are directed to the outlet of the battery system through an area that acts as a filter section to minimize or at least reduce the number of particles exiting the battery system as well as to cool the gas so as not to cause a fire to the outside. For this purpose, hot particles are filtered through a variety of specially arranged and configured baffles that cause turbulence in the filter area to separate particles and gas and allow the escaping gas a longer path to cool down before leaving the battery system.

In this document, the term "particles" refers to solid particles and liquid droplets. Furthermore, the term "gas" is used synonymous with "venting products", "exhaust gas" and "venting gas".

A stream or flow of venting products (or, in other words, a (exhaust) gas stream or a (exhaust) gas flow), may refer to a continuous or intermittent volume or mass flow of substances released during a thermal runway. The flow of venting products can consist of both solid components (e.g., particles such as electrolyte residues, electrode fragments) and fluids (such as gases and liquid components).

The venting products are collected, discharged, for example via the exhaust gas path (see above), e. g. via exhaust gas path channels or (at least partially) via the venting space, and fed to the enclosed space acting as a separator or filter by means of the inlet. There, the hot particles are cooled, partially separated and retained and the residence time of the particles and gases is extended in order to reduce their ignitability. In other words, means a provided that guide the venting products from the battery cells to the at least one inlet.

By increasing the turbulence, the particles experience increased swirling. Furthermore, the particles can no longer be kept in suspension by the turbulence and collide relatively frequently with the walls due to gravity. As a result, they are subject to a certain loss of momentum, which delays their transportation. Following the baffles, there can also be an increased separation of the flow of venting products within the enclosed space (or, in other words, the gas flow), even combined with negative backflow. As a result, the particles experience a further delay and thus a separation effect.

The battery system according to the invention has the ability to separate and store hot particles from the venting gas during a thermal runaway within a filter section equipped with baffles to ensure turbulent gas flow and to cool down the venting gas before exiting the battery system.

The operating principle is similar to that of mass force separation, whereby the particles suspended in the gas can no longer follow the flow movement and are deposited on internals or walls. They are differentiated according to the effective transport forces of gravity, inertia and centrifugal force. The mass forces responsible for particle separation act transversely to or against the flow resistance force and are directly proportional to the particle mass, so that the respective forces are proportional to the third power of the particle diameter. This separation principle is particularly effective for separating particles with an aerodynamic diameter of at least 2 µm. For particles of this size, the influence of diffusion can be neglected. Among other things, graphite particles with a size of 1 to 6 µm and liquid aluminum droplets with sizes of 1 to 3 mm occur in the venting products. Furthermore, clumping can occur in flow inlets up to 10 mm.

In principle, depending on their specific design, the baffles can act as inertial or deflection separators, in which flows are deflected in such a way that the particles suspended in the gas cannot follow the flow movement and are separated. The separation of particles, droplets or dust from flowing venting gases takes place due to the inertial force, in that the flow of fluid components of the flow of venting products within the enclosed space (or in other word, flow of fluid components of the gas flow) is merely deflected by the baffles. The operating principle is based on the fact that the particles suspended in the venting gas can no longer follow a changing flow movement due to their inertia. They are deposited on internals or walls or separated in enriched form in a partial flow.

In other words, the battery system provides a filtering section with baffles causing turbulent gas flow to separate particles, a section in the filter systems acting as particle storage and an elongation of venting path to cool down the gas flow.

Additionally, the gas expands and there are lee areas within the enclosed space where the particles can settle down. Even if these lee areas, for example storage areas, are full with dust, there still remains a free path between the inlets and outlet such that the enclosed space is not clogged.

The improvement of the proposed solution is to ensure or increase a separation of hot particles and venting gas with high temperatures, for example beyond 1000° C, before exiting the system. With the further reduction of gas temperature and no or less hot particles exiting the battery pack the risk on outside fire is very much reduced.

Due to the central arrangement of the outlet a certain distance from the outlet in the typical arrangement of battery systems, for example in systems or vehicles, to an area accessible to people can be maintained. In other words, a battery system can only be accessed along its outer circumference, so that in the event of degassing, the gas escapes centrally below the battery pack and not in the direct vicinity of potentially nearby people.

The plurality of baffles or in other words vertical guide blades can further be used to support the underbody protection plate in the case of an underbody/bollard event. Thus, the vertical guide blades can serve as deformation structure between the underbody protection plate and the underside of the battery pack, e.g. the floor or the optional cooling plate.

According to one embodiment, the inlet is arranged in an area of an outer circumference of the underbody protection plate. The inlet may be arranged only in an area of an outer circumference of the underbody protection plate (in case of several inlets). The edge, or in other words rim, of the underbody protection plate may include the inlet. In case of a plurality of inlets, some may be provided on a first long side of the enclosed space and some further inlets may be provided on a second long side opposite the first long side. Accordingly, some of the venting products can then also be guided out of the venting space in a different horizontal direction, for example in the opposite direction to the one horizontal direction, and then also in a vertical, downward direction via the other inlets into the enclosed space. The same number of inlets may be provided on each long side. Between 1 and 5, 2 and 4 or 3 inlets may be provided on each long side. By arranging the inlets in the area of the outer circumference and the outlet in the central area, there is a sufficient flow path between the inlet and outlet to ensure cooling and separation, while at the same time maintaining a certain distance from the outlet in the typical arrangement of battery systems, for example in systems or vehicles, to an area accessible to people. In other words, a battery system can only be accessed along its outer circumference, so that in the event of degassing, the gas escapes centrally below the battery pack and not in the direct vicinity of potentially nearby people.

According to another embodiment, at least one of the plurality of baffles includes a roughened surface with a surface roughness greater than 0,5 mm. Roughness measurements of surfaces are possible in the form of line profiles and as planar, three-dimensional roughness measurements. The evaluation of profilometric analyses is regulated by the standards DIN EN ISO 4287 for line profiles and DIN EN ISO 25178 for three-dimensional roughness measurements of surfaces. The standards also define the parameters of roughness measurements. ISO 25178 defines the surface-related roughness value Sa via the arithmetic mean of the topography height z(x,y). A suitable optical measurement method is confocal microscopy. The surface roughness value Sa can be greater than 0.6 mm, greater than 0.8 mm and greater than 1 mm. The roughness further increases the turbulence, which improves the deposition effect as described above.

A region of one or more baffles disposed downstream or closer to the outlet may further have a higher surface roughness than a region of the one or more baffles disposed upstream or closer to the inlet. A region of one or more baffles disposed on a downstream side of the one or more baffles may further have a higher roughness than a region of the one or more baffles disposed on an upstream side of the one or more baffles. The one or more baffles may have a higher roughness in storage areas than in cooling areas and/or feed areas. This prevents clogging of the inlet due to separation, while achieving a higher separation effect in other areas.

According to another embodiment, at least one of the plurality of baffles is arranged such that a spin is induced into the venting products for forming a centrifugal and/or inertial separator. In other words, the arrangement generates a swirl flow like flow pattern. A swirl flow is a rotationally symmetrical flow with circumferential components. As with the swirl flow in pipes, in many cases there is an axial component of the flow velocity in addition to the circumferential component. The flowing particles then move along helical paths and cover a greater distance along the pipe wall within a certain pipe length compared to a swirl-free flow at the same flow velocity. This results in a greater pressure loss. Similar to a cyclone or centrifugal separator, the gas flow is set in a rotational motion after entering the device due to its own speed. The particles suspended in the gas are partially separated as a result of the centrifugal force acting on them. Vortex flows occur, for example, during the flow in a cyclone. A gas flow loaded with particles (e.g. air containing dust) enters a circular path tangentially. The particles are thrown outwards by the centrifugal force and caught. The radial pressure difference mentioned earlier plays a significant role here.

The baffle may have a slope for inducing the spin. The slope or inclination refers to an inclined position in relation to the z-axis, so that in addition to directional components in the direction of the x- and y-axis, a directional component is also generated in the direction of the z-axis.

According to another embodiment, at least one of the plurality of baffles includes a guide element which is designed to impose a rotational movement on a flow of the venting products (or, in other words, on the gas flow). In other words, the guide element is arranged such that a spin is induced into the venting products for forming a centrifugal and/or inertial separator. In other words, this baffle may include a structural elevation, such as a ramp or a guide element, which locally deflects the flow so that further directional components are imposed on it. This can be used to generate a swirl flow (see above), for example. The guide element can, for example, be aligned in such a way that it imposes a directional component on the flow in the z-direction, i.e. directed upwards or downwards in relation to the battery pack. The guide element can be a guide vane.

The guide element may be arranged on a portion of the at least one baffle which is arranged closer to the inlet than to the outlet. This portion may indicate an area of the baffle that is located upstream or closer to the inlet than an area of the baffle that is located downstream or closer to the outlet, and/or may indicate an area of the baffle that is located on an upstream side of the baffle. In other words, this influences the flow in an initial area of the baffle so that an increased influence is exerted on the flow.

According to another embodiment, at least one pair of the plurality of baffles forms a gas flow path, for example a spiral path. The gas flow path may extend partially or completely between the inlet and outlet. In other words, a channel, flow route or flow pipe is formed. In other words, the two baffles form a flow channel, flow route or flow pipe. The baffles may connect the underbody protection plate and the floor or the cooling plate to each other, whereby a channel with a rectangular flow cross-section, for example, is then formed. Such a channel may have a rectangular cross-sectional area, which may be larger than 50 mm x 20 mm, thus avoiding blockages. However, the cross-section may also have other shapes. A spiral shape further increases separation due to inertia and centrifugal forces. The baffles may have cut-outs or interruptions. A gas flow path in the sense of the present invention still exists if the baffles extend more than 50% along their course and thus have less than 50% interruptions, relative to their extension along the x- and y-directions or in other words their respective length.

According to another embodiment, the battery system includes a grid element extending between the underbody protection plate and the floor or the optional cooling plate and arranged between the inlet and the outlet to redirect venting products exhausted by at least one of the battery cells while a thermal runaway. The grid element may extend at least partially or fully between the underbody protection plate and the floor (or the optional cooling plate). The grid element arranged between the inlet and the outlet can filter the venting products. The grid element may be arranged between at least one pair of the plurality of baffles. The dust or particles are deposited particularly in areas with grid-like structures. Consequently, deposition is enhanced by arranging such structures in areas where deposition is desired or not obstructive. Such areas are present, for example, when a flow cross-section expands. For example, two baffles may form a flow channel, whereby the distance between the two baffles increases in the downstream direction, i.e. the flow cross-section expands. Such an area can also be referred to as an expansion area. Grid-shaped elements can be arranged within this area. They do not cause clogging, but increase the separation and deposition of particles. Deposition is also desirable in edge areas, whereby a flow path remains free between the inlet and outlet so that the grid element may be arranged in edge areas and/or storage areas.

According to another embodiment, at least one of the plurality of baffles includes a curved section for deflecting a flow path of the venting products. This deflects the flowing gas. Due to the inertia to which the particles are subject, the particles accumulate in the curved area and slow down in relation to the gas flow. This results in improved separation of the particles.

According to another embodiment, another of the plurality of baffles is arranged downstream of the curved section of the one of the plurality of baffles such that a flow path of the venting products is divided. The curved section causes the particles to accumulate in one part of the gas flow in a cross-section of the gas flow, so that the other baffle allows the gas flow to continue separately. One part of the gas flow then has a higher concentration of particles and can be transported separately, for example to storage areas, while the other has a lower concentration of particles, whereby this part of the gas flow can continue independently.

According to another embodiment, the curved section has such a radius of curvature that a deflection angle of the venting products flowing through the flow path is less than 180°, for example less than 135° and such as less than 100°. This provides a suitable deflection, as a result of which the venting products and the particles may be subjected to an inertia that enables improved separation.

According to another embodiment, at least one of the plurality of baffles includes surface filters and/or depth filters on their surface. Surface filters are characterized by the fact that the dust particles are separated almost exclusively on the surface of the filter. There they form a layer of dust that largely determines the filtration performance. In contrast, with depth filters the separated dust is deposited inside the filter structure. In this case, the filtration properties are determined by the internal composition of the filter. Depth filters usually consist of a tangle of synthetic fibers, glass fibers or even metal fibers. The diameters of the fibers range from a few µm to approx. 50 µm. In addition, nanofibers with diameters of 0.05 µm to 1 µm are becoming increasingly widespread. They are always used in combination with coarser fibers, which ensure the stability of the filter. The fibers only take up a few percent of the filter volume. Typical distances between them are 2 to 10 fiber diameters and are usually much larger than the particles to be separated. The separation of particles in depth filters is therefore not achieved by the sieve effect. Instead, the separation processes on the individual fibers are decisive for the separation. The ability of a filter to cut off particles is based on various physical and mechanical phenomena, such as diffusion, interception, inertia effect and sieve effect. Electrostatic forces between the particles and the baffles also play a role here. Particles with a larger diameter than the enclosed space within the baffles cannot pass through the filter. Larger particles have too great an inertial force to be able to follow the gas flow when it is deflected by the baffles. The particles continue to move along their original path and stick to the upstream side of the baffles. The inertia effect increases with increasing air velocity and larger particle diameter.

According to another embodiment, at least one of the plurality of baffles includes perforations. The baffle, for example in an expansion area or storage area, therefore has perforations that pass through the baffle and is, in other words, grid-shaped. In other words, the baffle is a grid-shaped element that has regular or irregular patterns of recesses or openings. This results in partial gas flow combined with the turbulence described in more detail above with its corresponding effects through the openings, as well as deposits of particles, which can ultimately lead to blockage, so that there is then a completely closed baffle, which causes complete guidance of the gas, whereby from this point, in addition to the deposition of particles, the residence time and cooling is also improved.

According to another embodiment, at least one of the plurality of baffles includes an energy-absorbing deformation structure. The baffles may have a saw blade pattern or a bellows pattern along their height, i.e. the z-direction. As a result, they have spring properties and can absorb shocks through compression and then expand again. The energy-absorbing deformation structure therefore improves the protective function of the underbody protection plate while at the same time improving the cooling and separating effect.

According to another embodiment, an underside of the underbody protection plate includes heat transfer elements for heat conduction to outside air. The heat transfer elements may include ribs or fins. These provide an increased surface area for the heat transfer of the venting products from the enclosed space to the environment, which improves the cooling effect. At the same time, they improve the protective function of the underbody protection plate.

Yet another aspect of the present disclosure refers to an electric vehicle. The electric vehicle includes the battery system according to the invention.

### Specific Embodiments

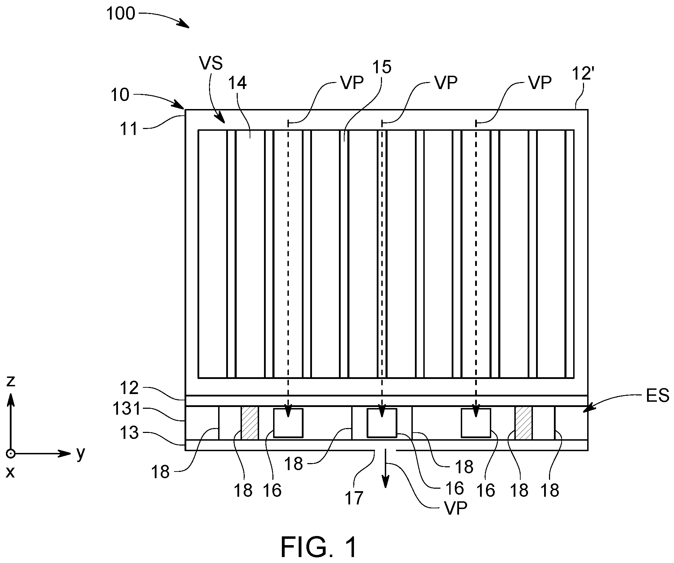

FIG. 1 is a cross-sectional view of a schematic structure of a battery system 100 in side view according to one embodiment. The battery system 100 includes a battery pack 10. The battery pack 10 includes a housing 11 with a floor 12 and a cover 12', and a plurality of battery cells 14 accommodated within the housing 11 above the floor 12, wherein spacers 15 are disposed between adjacent battery cells 14. An underbody protection plate 13 is arranged below the floor 12, wherein the underbody protection plate 13 and the floor 12 are spaced apart so that they form an enclosed space ES, wherein the enclosed space ES includes a plurality of inlets 16 fluidly connected to the housing 11. The enclosed space ES includes an outlet 17 which leads out of the battery system 100, wherein the outlet 17 is arranged in a central area of the underbody protection plate 13. The battery system 100 includes a plurality of baffles 18 completely extending between the underbody protection plate 13 and the floor 12 and arranged between the inlets 16 and the outlet 17 to redirect venting products VP exhausted by at least one of the battery cells 14 while a thermal runaway. The relative arrangements are illustrated by the x-, y- and z-axes. Here, "below", "underneath", "above" and "over" refer to the z-axis, with meanings such as "below" referring to a negative z-direction and "above" to a positive z-direction.

A venting space VS is arranged above the battery cells 14 of the battery pack 10. The venting space VS is a room used to collect the venting products VP from one or more degassing cells 14 for subsequent distribution. The venting products VP may then be fed laterally, i.e. in a horizontal direction from the venting space VS and then in a vertical, downward direction, shown by the dashed arrows, via the inlets 16 into the enclosed space ES.

The wide, flat rectangular baffles 18 are intended to show schematically that they run in both the x-direction and the y-direction.

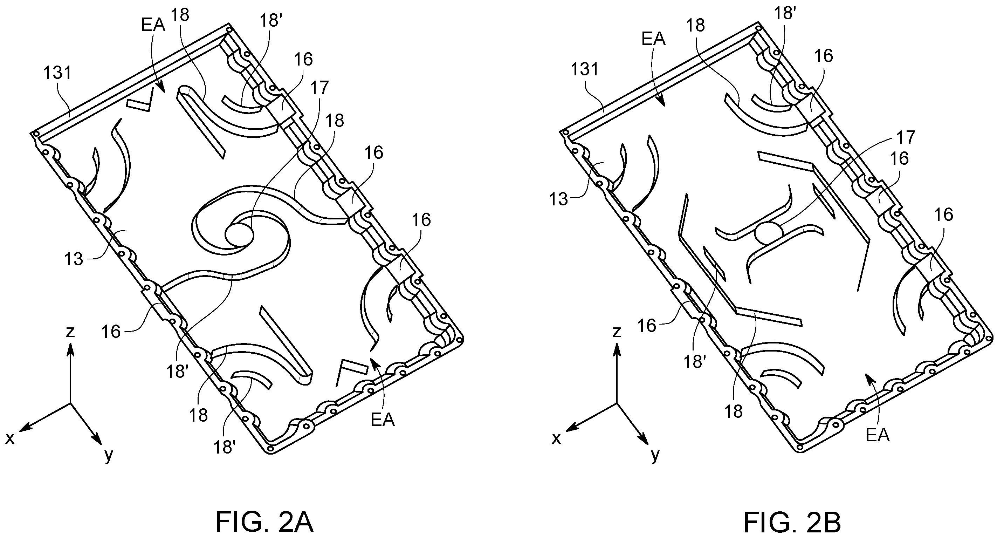

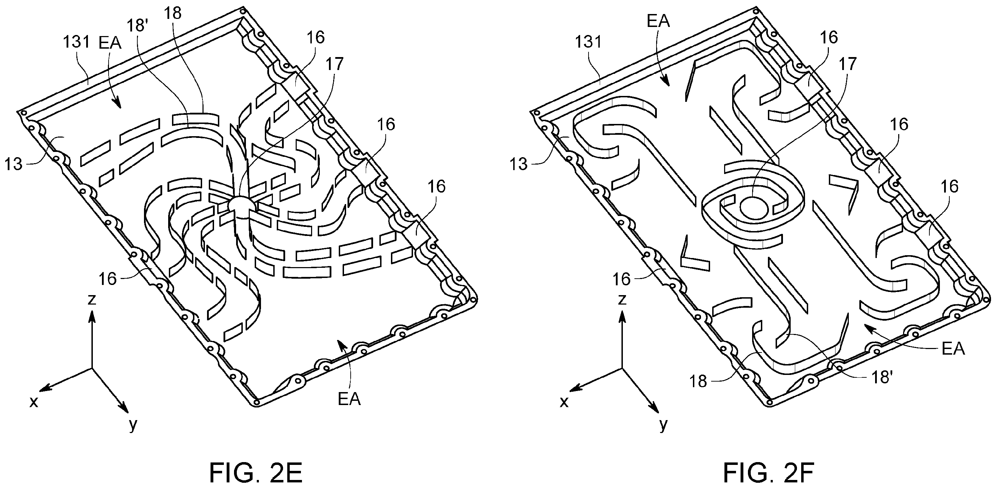

FIGS. 2A - 2F are a perspective view of a schematic structure of an underbody protection plate 13 according to some embodiments.

For reasons of clarity, not every single baffle 18, 18' is given a reference symbol in the FIGS. 2A - 2F, as it is already clear which component represents a baffle 18, 18'.

A matching pair of baffles, which also form a flow channel, consists of one baffle 18 and another baffle 18'.

The underbody protection plate 13 has an edge 131 that runs along its circumference and extends towards the floor (see also FIG. 1) to be connected to the floor 12 accordingly. The edge 131 includes a flange 131 that contacts the floor respectively for joining.

A large number of baffles 18, 18' are provided, which extend from the underbody protection plate 13 in the z-direction, i.e. in the direction of the floor 12, which is arranged above and is not shown in FIGS. 2A - 2F. The baffles 18, 18' may contact the floor 12 in an assembled state (see FIG. 1). The geometric dimensions as the total lengths of each baffle in relation to the x- and y-directions differ from one another, as do their shapes. The inlets 16 are also shown, some or each of which are adjoined by at least one baffle 18, 18 ' and represent an inlet area. It can be seen that inflowing venting products VP form a turbulent flow field due to the baffles 18, 18', while at the same time the area between inlets and outlets remains free and can be flowed through.

The plurality of baffles 18, 18' are connected to the underbody protection plate 13. The plurality of baffles 18, 18' extend along a plane parallel to a plane defined by the underbody protection plate 13, in other words along an x- and/or y-direction. The baffles 18, 18' have a long extension that runs along the x- and/or y-direction and a short extension that runs along a vertical direction as in the z-direction.

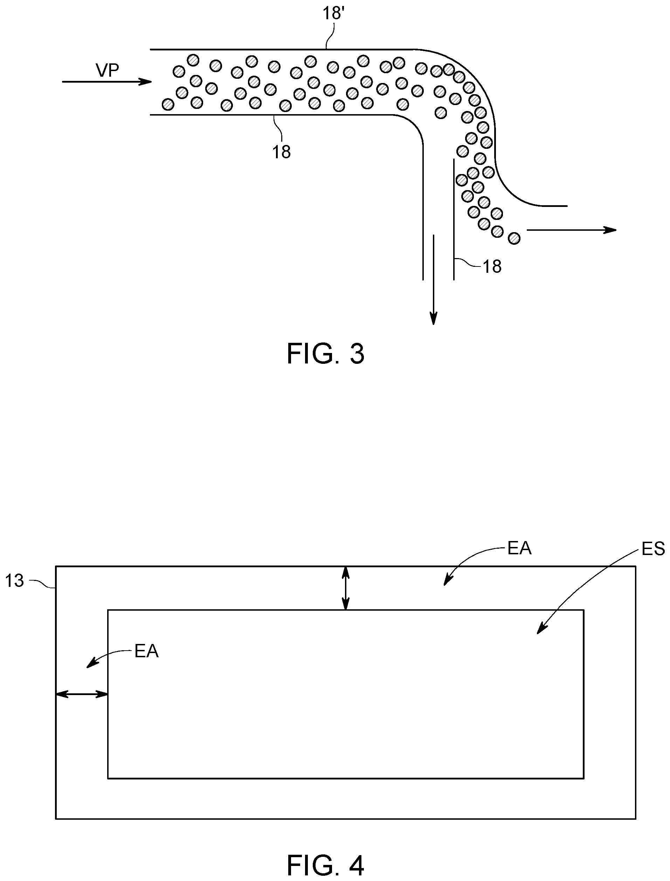

The plurality of baffles 18, 18' may be arranged and/or may be configured in such a way that they form so-called storage areas and/or cooling areas. Storage areas may be provided in edge areas EA (see also FIG. 4) of the enclosed space ES, for example. The edge areas EA are also shown in FIG. 4 for further illustration purposes.

The inlets 16 are arranged in an area of an outer circumference of the underbody protection plate. The edge 131, or in other words rim (or flange), of the underbody protection plate 13 includes the inlets 16. Three inlets 16 are provided on a first long edge of the edge 131 corresponding to a first long side of the enclosed space ES, and one inlet 16 is provided on a second long edge of the edge 131 corresponding to a second long side opposite the first long side.

Several pairs of the plurality of baffles 18 and 18' form a gas flow path. In other words, the two baffles 18, 18' form a flow channel or flow route. The baffles 18, 18' may connect the underbody protection plate 13 and the floor or an optional cooling plate (not shown) to each other, wherein the optional cooling plate is arranged between the floor 12 and the underbody protection plate 13, whereby a channel with a rectangular flow cross-section, for example, is then formed.

For example, a pair of baffles 18, 18' in FIG. 2A are arranged in a corner area. They run parallel to each other and have a curved section, with one baffle 18 of this pair extending further. In addition, L-shaped baffles are provided in lateral edge areas EA. Some baffles 18 are connected to one side of a respective inlet 16 in such a way that a direct path to the outlet 16 is blocked, so that the gas flow path is increased.

In FIG. 2B, some baffles 18, 18' have straight sections that run parallel to the first or second long side, so that incoming gas strikes them essentially vertically and undergoes a deflection. This is followed by a widening expansion area, from which a direct path to outlet 17 is also blocked by baffles 18, 18', so that a deflection also occurs here.

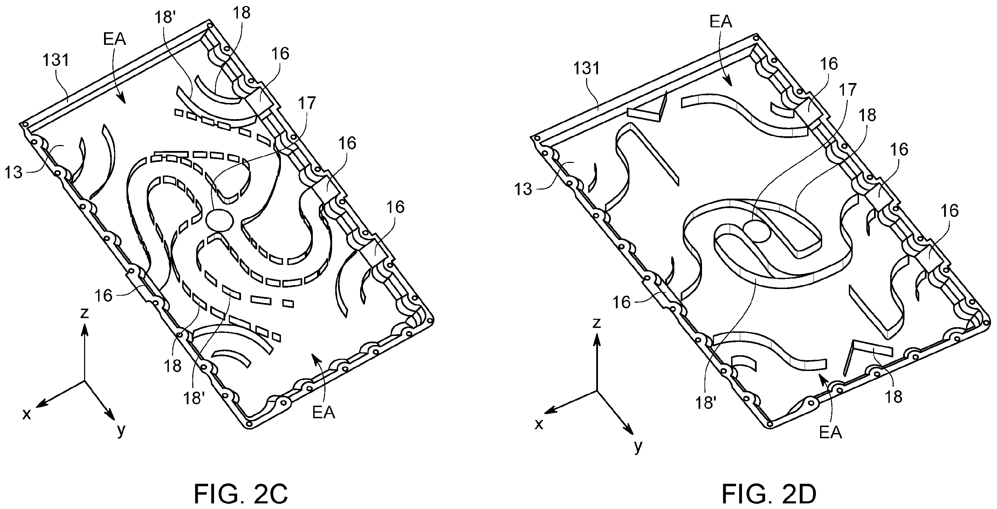

As illustrated in FIG. 2C, the baffles 18, 18' may have cut-outs or interruptions. A flow path in the sense of the present invention still exists because the baffles 18, 18' extend more than 50% along their course and thus have less than 50% interruptions, relative to their extension along the x- and y-directions.

Further variations of the baffles 18, 18' are shown in FIGS. 2D to 2 F.

FIG. 3 is a top view of a schematic structure of baffles according to another embodiment. Several of the plurality of baffles 18, 18' further include a curved section. As illustrated in FIG. 3, another baffle 18 of the plurality of baffles is arranged downstream of the curved section formed by the pair of baffles 18, 18' such that the gas flow path is divided, as indicated by the arrows. The curved section causes the particles to accumulate in one part of the gas flow in a cross-section of the gas flow, so that the other downstream baffle 18 allows the gas flow to continue separately. One part of a gas flow then has a higher concentration of particles and can be transported separately, for example, to storage areas, while the other has a lower concentration of particles, whereby this part of the gas flow can continue independently.

FIG. 4 is a top view of a schematic structure of edge areas EA of an underbody protection plate 13 and an enclosed space ES according to another embodiment. The edge areas EA extend along a circumference of the underbody protection plate 13. They extend starting from each side edge of the underbody protection plate 13 towards a center of the underbody protection plate 13 or the center of the enclosed space ES. The underbody protection plate 13 and correspondingly the enclosed space ES as well are rectangular. In this case, the edge areas EA are formed by a strip extending around the above-mentioned percentage areas starting from each of the four side edges of the corresponding components.

### Reference signs

- 100: battery system
- 10: battery pack
- 11: housing
- 12: floor
- 12': cover
- 13: underbody protection plate
- 131: edge/flange
- 14: battery cell
- 15: spacer
- 16: inlet
- 17: outlet
- 18, 18': baffle
- VP: venting products/gas
- VS: venting space
- ES: enclosed space
- EA: edge area

## Claims

1. A battery system (100), comprising:
a battery pack (10) comprising a housing (11) with a floor (12) and a plurality of battery cells (14) accommodated within the housing (11) above the floor (12),
an underbody protection plate (13) arranged below the floor (12), wherein the underbody protection plate (13) and the floor (12) are spaced apart to form an enclosed space (ES) therebetween, wherein the enclosed space (ES) comprises at least one inlet (16) fluidly connected to the housing (11) and an outlet (17) which leads out of the battery system (100), wherein the outlet (17) is arranged in a central area of the underbody protection plate (13), and
a plurality of baffles (18, 18') extending between the underbody protection plate (13) and the floor (12) and arranged between the inlet (16) and the outlet (17) to redirect venting products (VP) exhausted by at least one of the battery cells (14) while a thermal runaway.

2. The battery system (100) as claimed in claim 1, wherein the inlet (16) is arranged in an area of an outer circumference of the underbody protection plate (13).

3. The battery system (100) as claimed in claim 1 or 2, wherein at least one of the plurality of baffles (18, 18') comprises a roughened surface with a surface roughness greater than 0,5 mm.

4. The battery system (100) as claimed in any one of the preceding claims, wherein at least one of the plurality of baffles (18, 18') is arranged such that a spin is induced into the venting products (VP) for forming a centrifugal and/or inertial separator.

5. The battery system (100) as claimed in any one of the preceding claims, wherein at least one of the plurality of baffles (18, 18') comprises a guide element which is designed to impose a rotational movement on a flow of the venting products.

6. The battery system (100) as claimed in any one of the preceding claims, wherein at least one pair of the plurality of baffles (18, 18') forms a gas flow path.

7. The battery system (100) as claimed in any one of the preceding claims, wherein the battery system (100) comprises a grid element extending between the underbody protection plate (13) and the floor (12) and arranged between the inlet (16) and the outlet (17) to redirect venting products (VP) exhausted by at least one of the battery cells (14) while a thermal runaway.

8. The battery system (100) as claimed in any one of the preceding claims, wherein at least one of the plurality of baffles (18, 18') comprises a curved section for deflecting a flow path of the venting products (VP).

9. The battery system (100) as claimed in claim 8, wherein another of the plurality of baffles (18, 18') is arranged downstream of the curved section such that a flow path of the venting products (VP) is divided.

10. The battery system (100) as claimed in claim 8 or 9, wherein the curved section has such a radius of curvature that a deflection angle of the venting products (VP) flowing through the flow path is less than 180°.

11. The battery system (100) as claimed in any of the preceding claims, wherein at least one of the plurality of baffles (18, 18') comprise surface filters and/or depth filters on their surface.

12. The battery system (100) as claimed in any one of the preceding claims, wherein at least one of the plurality of baffles (18, 18') comprises perforations.

13. The battery system (100) as claimed in any one of the preceding claims, wherein at least one of the plurality of baffles (18, 18') comprises an energy-absorbing deformation structure.

14. The battery system (100) as claimed in any one of the preceding claims, wherein an underside of the underbody protection plate (13) comprises heat transfer elements for heat conduction to outside air.

15. An electric vehicle comprising the battery system (100) as claimed in any one of the preceding claims.
